# EUROPÄISCHE PATENTANMELDUNG

(11) **EP 4 844 349 A1**
(43) Veröffentlichungstag der Anmeldung: **25.11.2026**
(21) Anmeldenummer: 26179626.2
(22) Anmeldetag: 19.05.2026
(51) Int. Cl.: G01F 23/02, F17C 1/00, F25B 41/00, F25B 43/02, F25B 49/02

(54) **SICHTFENSTER-ARMATUR FÜR EINEN BEHÄLTER, BEHÄLTER UND KÄLTEKREISLAUF**

(30) Priorität: 19.05.2025 DE 102025001755
(71) Anmelder: EM Polar k.s., 38801 Blatná (CZ)
(72) Erfinder: Kraml, Jan, 38732 Sedlice (CZ)
(74) Vertreter: Herrmann, Jochen

(57) **Zusammenfassung**

Die Erfindung betrifft eine Sichtfenster-Armatur (1) für einen Behälter (80), einen Behälter (80) mit einer solchen Sichtfenster-Armatur (1) sowie einen Kältekreislauf mit einem solchen Behälter (80). Die Sichtfenster-Armatur (1) hat ein Sichtfenster (60) sowie einen Adapter (10), der einen in einer Höhenrichtung (H) verlaufenden Röhrenbereich (27) aufweist, der dazu ausgebildet ist, eine Flüssigkeit (2) aufzunehmen und mit dem Behälter (80) zu kommunizieren. Der Adapter (10) hat ferner eine sich in Höhenrichtung (H) und Breitenrichtung (B) erstreckende Sichtfenster-Anlagefläche (29), die zur Anlage des Sichtfensters (60) ausgebildet ist, sodass der Röhrenbereich (27) durch das Sichtfenster (60) optisch zugänglich ist. Weiter ist ein Halteteil (35) vorgesehen, um das Sichtfenster (60) am Adapter (10) festzulegen. Eine stabile Anbindung der Sichtfenster-Armatur (1) an dem Behälter (80) auch in gekrümmten Bereichen wird erreicht, indem der Adapter (10) einen Anschlussbereich (16) mit einer konkav gewölbten Anlagefläche (17) zur Anlage an einer Außenseite (82) des Behälters (80) aufweist.

## Beschreibung

Die Erfindung betrifft eine Sichtfenster-Armatur für einen Behälter, insbesondere für einen Druckbehälter. Die Erfindung betrifft ferner einen Behälter mit einer solchen Sichtfenster-Armatur sowie einen Kältekreislauf mit einem solchen Behälter.

Sichtfenster-Armaturen dienen dazu, einen Einblick in das Innere eines Behälters zu gewähren und/oder Aufschluss über einen Füllstand einer Flüssigkeit im Inneren des Behälters zu geben. Sichtfenster-Armaturen, insbesondere solche zum Ablesen eines Füllstands, sind häufig dazu ausgebildet, über Rohrleitungen mit dem Behälter verbunden zu werden. Hierzu können beispielsweise an der Sichtfenster-Armatur ein oder mehrere Rohranschlüsse vorgesehen sein. Eine oder mehrere Rohrleitungen können dann über entsprechende Rohranschlüsse mit dem Behälter verbunden werden. Auf diese Weise kann die Sichtfenster-Armatur mit dem Behälter nach dem Prinzip der kommunizierenden Röhren kommunizieren, sodass ein Füllstand des Behälters an der Sichtfenster-Armatur ablesbar ist. Alternativ werden Sichtfenster-Armaturen unmittelbar, d.h. ohne Zwischenschaltung von Rohrleitungen an Behältern befestigt, insbesondere angeschweißt. Hierbei wird eine Öffnung in die Behälterwand eingebracht, und die Sichtfenster-Armatur wird im Bereich der Öffnung mit der Behälterwand verbunden.

Über Rohrleitungen mit dem Behälter verbundene Sichtfenster-Armaturen können einem erhöhten Risiko von Beschädigungen unterliegen. Insbesondere wenn die Armaturen auch mittels der Rohrleitung an dem Behälter befestigt sind, können bei Kollisionen mit der Armatur sowohl die Armatur als auch die Rohrleitungen und/oder die Behälterwand beschädigt werden. Auch können solche mittels Rohrleitungen verbundenen Armaturen recht weit von der Behälterwand abstehen, sodass die Gefahr von Kollisionen zusätzlich auch erhöht ist. Diese Nachteile mögen bei unmittelbar mit der Behälterwand verbundenen, insbesondere angeschweißten Armaturen nicht oder nur in geringerem Maße vorliegen. Jedoch können solche Armaturen nur in ebenen Bereichen der Behälterwand oder in Bereichen mit allenfalls geringer Krümmung angebracht werden.

Aufgabe der Erfindung ist es, eine Sichtfenster-Armatur bereitzustellen, die eine stabile Anbindung an Behälter, insbesondere Druckbehälter, auch in gekrümmten Bereichen auf einfache Weise ermöglicht.

Aufgabe der Erfindung ist es auch, einen Behälter mit einer Sichtfenster-Armatur bereitzustellen, die auf einfache Weise stabil und zuverlässig an dem Behälter befestigt ist.

Letztlich ist es auch Aufgabe der Erfindung, einen Kühlkreislauf mit einem solchen Behälter bereitzustellen.

Die die Sichtfenster-Armatur betreffende Aufgabe wird mit einer Sichtfenster-Armatur gemäß Anspruch 1 gelöst. Ein solche erfindungsgemäße Sichtfenster-Armatur weist ein Sichtfenster auf, das vorzugsweise zumindest teilweise lichtdurchlässig ist. Ferner weist die Sichtfenster-Armatur einen Adapter auf, der einen in einer Höhenrichtung verlaufenden Röhrenbereich aufweist, der dazu ausgebildet ist, eine Flüssigkeit aufzunehmen, und dazu, mit dem Behälter zu kommunizieren. Die Höhenrichtung kann in einem montierten Zustand der Sichtfenster-Armatur der Schwerkraftrichtung entsprechen. Somit kann der Füllstand der Flüssigkeit in dem Röhrenbereich den Füllstand in dem Behälter repräsentieren. Der Adapter weist ferner eine Sichtfenster-Anlagefläche auf, die sich in Höhenrichtung und in einer senkrecht zur Höhenrichtung orientierten Breitenrichtung erstreckt. Die Sichtfenster-Anlagefläche dient zur zumindest teilweisen mittelbaren oder unmittelbaren Anlage eines Anlagebereichs des Sichtfensters, sodass der Röhrenbereich durch das Sichtfenster zumindest teilweise optisch zugänglich ist. Das Sichtfenster kann sich somit ebenfalls in Höhenrichtung und in Breitenrichtung erstrecken, sodass durch das Sichtfenster in Tiefenrichtung in den Röhrenbereich geblickt werden kann. Das Sichtfenster kann also einen optischen Zugang zu dem Röhrenbereich schaffen, sodass der Füllstand von außen abgelesen werden kann. Die Sichtfenster-Armatur weist ferner ein Halteteil auf, das dazu ausgebildet ist, das Sichtfenster an dem Adapter festzulegen. Beispielsweise kann das Sichtfenster zwischen dem Adapter und dem Halteteil eingespannt sein.

Da erfindungsgemäß vorgesehen ist, dass der Adapter einen Anschlussbereich aufweist, der eine konkav gewölbte Anlagefläche zur Anlage an einer Außenseite des Behälters aufweist, kann die Sichtfenster-Armatur auch an konvex gewölbten Außenseiten von Behälterwänden auf einfache Weise zuverlässig und stabil, insbesondere stoffschlüssig, vorzugsweise durch Schweißen, angebracht werden.

Selbstverständlich kann der Anschlussbereich neben der Anlagefläche weitere Bereiche, insbesondere weitere Flächen (auch ebene Flächen) aufweisen.

Adapter und Halteteil können aus einem metallischen Werkstoff gebildet sein, vorzugsweise aus einem Stahl, insbesondere aus einem Druckbehälterstahl. Das Sichtfenster kann aus einem Glas bestehen, insbesondere einem thermisch und/oder chemisch vorgespannten Glas.

Die konkave Wölbung der Anlagefläche kann insbesondere derart sein, dass die Anlagefläche zumindest bereichsweise einer Rotationsfläche folgt. Hiermit kann dem Umstand Rechnung getragen werden, dass Behälter, insbesondere Druckbehälter, häufig ebenfalls mit ihren Behälterwänden zumindest bereichsweise Rotationsflächen folgen. Hierbei sind je nach Form des Behälters bzw. dessen Behälterwand verschiedene Arten von Rotationsflächen denkbar. So kann insbesondere vorgesehen sein, dass die Rotationsfläche ein Rotationsellipsoid, beispielsweise eine Kugel, ein Rotationsparaboloid, ein Kegel, oder ein Kreiszylinder ist. Kreiszylinder eignen sich beispielsweise für kreiszylindrische Behälter, Rotationsellipsoide beispielsweise für entsprechend geformte Boden- bzw. Stirnwände von Behältern.

Je nach Gestalt und Anordnung des Behälters, für den die Sichtfenster-Armatur ausgebildet sein soll, kann vorgesehen sein, dass die Rotationsachse der Rotationsfläche in Breitenrichtung oder in Höhenrichtung ausgerichtet ist. Beispielsweise kann für einen Behälter, der im Wesentlichen kreiszylindrisch ausgebildet und liegend angeordnet ist, mit einer entsprechend kreiszylindrisch ausgebildeten Rotationsfläche, deren Rotationsachse in Breitenrichtung verläuft, eine mit der Behälterwand korrespondierende Anlagefläche und somit eine stabile Verbindung erreicht werden. Bei einem entsprechenden Behälter, der stehend angeordnet ist, bietet es sich hingegen an, dass die Rotationsachse der Rotationsfläche in Höhenrichtung verläuft.

Gemäß einer Ausführungsform kann vorgesehen sein, dass die Anlagefläche zumindest bereichsweise einer Mantelfläche eines Zylinders, insbesondere eines geraden Zylinders, folgt. Hierbei kann insbesondere ein Zylinder mit einer von der Kreisform abweichenden Grundform vorgesehen sein - also ein Zylinder, der kein Kreiszylinder ist und somit keine Rotationsfläche bildet. Die Zylinderachse des Zylinders kann je nach Gestaltung und Orientierung des Behälters in Breitenrichtung oder in Höhenrichtung ausgerichtet sein.

Eine besonders stabile Sichtfenster-Armatur kann dadurch erreicht werden, dass der Röhrenbereich einen Boden aufweist, der von der Sichtfenster-Anlagefläche in einer Tiefenrichtung zurückversetzt ist, wobei die Tiefenrichtung senkrecht zu der Höhenrichtung und der Breitenrichtung orientiert ist. Der Boden kann zumindest bereichsweise einen Abschluss des Röhrenbereichs in Tiefenrichtung bilden.

Wenn vorgesehen ist, dass der Adapter einen ersten Durchgang und einen zweiten Durchgang aufweist, wobei die Durchgänge voneinander in Höhenrichtung beabstandet sind und jeweils eine Verbindung zwischen dem Anschlussbereich und dem Röhrenbereich bereitstellen, kann auf einfache Weise eine Kommunikation zwischen dem Behälter und dem Röhrenbereich hergestellt werden. Beispielsweise können die Durchgänge im Bereich des Anschlussbereichs mit entsprechenden Durchgängen des Behälters verbunden werden. Eine einfache Ausgestaltung ergibt sich, wenn die Durchgänge des Adapters als Bohrungen gestaltet sind.

Um eine zuverlässige und vorzugsweise restlose Entleerung des Röhrenbereichs zu ermöglichen, kann insbesondere vorgesehen sein, dass einer der Durchgänge in einem bezüglich der Höhenrichtung unteren Bereich des Röhrenbereichs vorgesehen ist. Dann kann bei einem Abfall des Flüssigkeitsspiegels die Flüssigkeit aus dem Röhrenbereich durch den Durchgang problemlos in den Behälter abfließen. Vorzugsweise kann eine Umrandung des Durchgangs von einem bezüglich der Höhenrichtung unteren Ende des Röhrenbereichs nicht oder nur geringfügig beabstandet sein, insbesondere weniger als ein lichtes Maß des Durchgangs, besonders bevorzugt um weniger als ein halbes lichtes Maß. Auf diese Weise kann bei einer Entleerung allenfalls ein geringes Restvolumen von Flüssigkeit in dem Röhrenbereich verbleiben. Das lichte Maß kann beispielsweise ein Durchmesser des Durchgangs sein und/oder, im Falle eines unrunden Querschnitts, ein in Höhenrichtung gemessenes lichtes Maß.

Eine weitere Verbesserung der Entleerung kann erreicht werden, wenn die Durchgänge, insbesondere der untere Durchgang, ausreichend groß sind/ist, sodass auch Schmutzpartikel oder dergleichen den Röhrenbereich zuverlässig verlassen können. Beispielsweise kann ein Durchmesser oder ein lichtes Maß des Durchgangs in Breitenrichtung der Ausdehnung des Röhrenbereichs in Breitenrichtung entsprechen, oder nur geringfügig geringer sein als diese, vorzugsweise mindestens 75% derselben betragen, weiter bevorzugt mindestens 90%.

Anstelle einzelner Durchgänge könnte natürlich auch eine durchgehende Öffnung an dem Adapter vorgesehen sein. Mit anderen Worten könnte der Röhrenbereich ohne einen Boden ausgebildet sein. Hierdurch wäre jedoch die Gesamtkonstruktion geschwächt, was insbesondere dann nachteilig ist, wenn die Sichtfenster-Armatur mit einem Druckbehälter eingesetzt werden soll. Wenn hingegen lediglich einzelne Durchgänge geschaffen sind, wird ein stabilerer Adapter, und somit eine stabilere Sichtfenster-Armatur geschaffen.

Vorzugsweise kann durch das Sichtfenster ein optischer Zugang zu einem oder beiden Durchgängen geschaffen sein, wenn das Sichtfenster mittelbar oder unmittelbar an der Sichtfenster-Anlagefläche des Adapters anliegt, insbesondere im montierten Zustand der Sichtfenster-Armatur. Somit kann der Zustand der Durchgänge inspiziert werden, ohne das Sichtfenster oder andere Teile der Sichtfenster-Armatur zu demontieren. Beispielsweise können Verstopfungen oder Verunreinigungen der Durchgänge auf diese Weise erkannt werden.

Auch wenn zwei Durchgänge prinzipiell genügen mögen, um den Füllstand des Behälters in dem Röhrenbereich nach dem Prinzip der kommunizierenden Röhren abzubilden, wird gemäß einer vorteilhaften Weiterbildung der Erfindung vorgeschlagen, dass der Adapter ferner einen dritten Durchgang aufweist, der eine Verbindung zwischen dem Anschlussbereich und dem Röhrenbereich bereitstellt, und dass der dritte Durchgang zwischen dem ersten Durchgang und dem zweiten Durchgang angeordnet ist. Auf diese Weise kann eine schnellere Reaktion des Flüssigkeitsstands innerhalb des Röhrenbereichs auf eine Änderung des Flüssigkeitsstands innerhalb des Behälters erreicht werden, insbesondere bei zähen Flüssigkeiten.

Ein kompakter und stabiler Aufbau kann dadurch erreicht werden, dass der Adapter einen Grundkörper aufweist, und dass der Anschlussbereich, und/oder der Röhrenbereich, und/oder die Sichtfenster-Anlagefläche, und/oder der/ein erster Durchgang, der eine Verbindung zwischen dem Anschlussbereich und dem Röhrenbereich herstellt, und/oder der/ein zweiter Durchgang, der eine Verbindung zwischen dem Anschlussbereich und dem Röhrenbereich herstellt, und/oder der/ein dritter Durchgang, der eine Verbindung zwischen dem Anschlussbereich und dem Röhrenbereich herstellt, einteilig von dem Grundkörper gebildet ist/sind. Auch kann hierdurch der Teileaufwand verringert werden.

Gemäß einer bevorzugten Weiterbildung der Erfindung wird vorgeschlagen, dass der Adapter im Anschlussbereich ein Kantenelement aufweist. Das Kantenelement kann insbesondere als Fase ausgestaltet sein. Bevorzugt ist das Kantenelement als Schweißnahtvorbereitung vorgesehen - hierzu ist insbesondere eine Fase geeignet. Das Kantenelement ist vorzugsweise im Übergang von der Anlagefläche zu einer Seitenfläche und/oder einer Oberseite und/oder einer Unterseite des Adapters angeordnet. Besonders bevorzugt ist das Kantenelement umlaufend um die Anlagefläche vorgesehen.

Gemäß einer bevorzugten Ausführungsform kann vorgesehen sein, dass das Sichtfenster eine Druckseite und eine gegenüberliegende Außenseite aufweist, und dass der Anlagebereich des Sichtfensters im Bereich der Druckseite vorgesehen ist. Somit ist kann die Druckseite in Richtung des mit dem Behälter kommunizierenden und somit gegebenenfalls druckbeaufschlagten Röhrenbereichs vorgesehen sein. Im Bereich der Druckseite kann ein Reflexbereich vorgesehen sein, der ein erleichtertes Ablesen des Flüssigkeitsstands ermöglicht. Der Reflexbereich kann hierzu insbesondere eine strukturierte Oberfläche aufweisen. Wenn die strukturierte Oberfläche Rillen aufweist, kann aufgrund der unterschiedlichen Brechungsindizes von Flüssigkeit und Luft (bzw. einem anderen in dem Behälter befindlichen Gas) ein stark unterschiedlich ausgeprägtes Reflexionsverhalten erreicht werden zwischen Bereichen, die mit Flüssigkeit in Kontakt stehen, und solchen, die mit Luft in Kontakt stehen. Ein hierdurch erzielbarer deutlicher Kontrast kann das Ablesen erleichtern. Um eine stufenlose Ablesbarkeit sicherzustellen, sind die Rillen vorzugsweise so ausgebildet, dass sie in Höhenrichtung verlaufen, wenn das Sichtfenster mittelbar oder unmittelbar an der Sichtfenster-Anlagefläche des Adapters anliegt, d.h. im montierten Zustand.

Eine stabile Befestigung des Sichtfensters kann erzielt werden, wenn der Adapter Befestigungsaufnahmen aufweist, das Halteteil den Befestigungsaufnahmen zugeordnete Durchgangslöcher aufweist, einander zugeordnete Befestigungsaufnahmen und Durchgangslöcher gemeinsam jeweils zur teilweisen Aufnahme eines Befestigungselements ausgebildet sind, und das Sichtfenster zwischen dem Adapter und dem Halteteil durch in den Befestigungsaufnahmen und den jeweils zugeordneten Durchgangslöchern teilweise aufgenommene Befestigungselemente einspannbar ist. Vorzugsweise kann zwischen Adapter und Halteteil hierbei ein Spalt verbleiben. Die Befestigungsaufnahmen können beispielsweise Schraubaufnahmen mit Innengewinde sein, die Befestigungselemente können beispielsweise Schrauben sein.

Eine zuverlässige Abdichtung des Röhrenbereichs ergibt sich, wenn das Sichtfenster in einem montierten Zustand zwischen der Sichtfenster-Anlagefläche des Adapters und einer Anlagefläche des Halteteils verspannt ist, und zwischen Sichtfenster und der Sichtfenster-Anlagefläche und/oder der Anlagefläche eine Dichtung vorgesehen ist. Insbesondere kommen hierzu Flachdichtungen in Betracht. Vorzugsweise sind Sichtfenster und Dichtung(en) im Krafthauptschluss angeordnet, d.h. die Spannung der Befestigungselemente wird überwiegend von dem Sichtfenster und der/den Dichtung(en) übertragen. In diesem Fall kann bei montierter Sichtfenster-Armatur ein Spalt zwischen Halteteil und Adapter verbleiben.

Die den Behälter betreffende Aufgabe wird durch einen Behälter gemäß Anspruch 13 gelöst. Demnach ist der Behälter mit einer Sichtfenster-Armatur gemäß einem der Ansprüche 1 bis 12 ausgestattet.

Um eine einfache, stabile und flüssigkeits- und/oder gasdichte Anbringung des Adapters der Sichtfenster-Armatur an dem Behälter zu erreichen, kann er vorzugsweise in seinem Anschlussbereich an dem Behälter stoffschlüssig befestigt sein, insbesondere mittels einer Schweißverbindung.

Eine vorteilhafte Weiterbildung sieht weiter vor, dass der Behälter einen oder mehrere Durchgänge aufweist, wobei die Durchgänge voneinander beabstandet sind und jeweils eine Verbindung zwischen einer Innenseite und einer Außenseite einer Behälterwand des Behälters herstellen, und dass der/die Durchgang/Durchgänge des Behälters mit jeweils mit einem Durchgang des Adapters in Verbindung steht/stehen. Eine einfache Ausgestaltung ergibt sich, wenn der Durchgang bzw. die Durchgänge als Bohrung(en) gestaltet ist/sind.

Anstelle einzelner Durchgänge könnte natürlich auch eine durchgehende Öffnung in der Behälterwand vorgesehen sein. Hierdurch wäre jedoch die Behälterwand geschwächt, was insbesondere dann nachteilig ist, es sich bei dem Behälter um einen Druckbehälter handeln soll. Wenn hingegen lediglich einzelne Durchgänge geschaffen sind, wird die Schwächung der Behälterwand minimiert.

Vorzugsweise kann durch das Sichtfenster und die Durchgänge des Adapters ein optischer Zugang zu den Durchgängen der Behälterwand geschaffen sein. Somit kann der Zustand der Durchgänge inspiziert werden, ohne das Sichtfenster oder andere Teile der Sichtfenster-Armatur zu demontieren. Beispielsweise können Verstopfungen oder Verunreinigungen der Durchgänge auf diese Weise erkannt werden. Auch kann ein Einblick in das Innere des Behälters durch das Sichtfenster erfolgen.

Die den Kältekreislauf betreffende Aufgabe wird mit den Merkmalen des Anspruchs 15 gelöst. Somit ist ein Kältekreislauf mit einem Behälter nach Anspruch 13 oder 14 vorgesehen. Der Behälter kann vorzugsweise einen Ölabscheider aufnehmen, insbesondere einen Ölabscheider zur Abscheidung von Öl aus einem Gasstrom des Kältekreislaufs, bevorzugt aus einem Kältemittelstrom. Bei dem Öl kann es sich um Schmieröl handeln, das zur Schmierung eines Verdichters des Kältekreislaufs dient. Nach der Verdichtung kann somit das Kältemittel mit Öl angereichert sein. Der Ölabscheider kann beispielsweise als Zentrifugalabscheider und/oder als Filtereinheit ausgebildet sein. Ein solcher Ölabscheider ist bekannt aus DE 10 2009 006 863 A1. Das von dem Ölabscheider abgeschiedene Öl kann die Flüssigkeit innerhalb des Behälters bilden.

Die Erfindung wird im Folgenden anhand eines in den Figuren dargestellten Ausführungsbeispiels näher erläutert. Es zeigen:
- Figur 1:: eine schematische Schnittansicht einer Sichtfenster-Armatur und eines Behälters,
- Figur 2:: eine schematische Vorderansicht eines Adapters,
- Figur 3:: eine schematische Schnittansicht gemäß der Markierung III-III in Figur 2,
- Figur 4:: eine schematische Rückansicht eines Sichtfensters,
- Figur 5:: eine schematische Vorderansicht des Sichtfensters,
- Figur 6:: eine schematische Seitenansicht des Sichtfensters,
- Figur 7:: eine schematische Vorderansicht eines Halteteils,
- Figur 8:: eine schematische Schnittansicht gemäß der Markierung VIII-VIII in Figur 7,
- Figur 9:: eine schematische Rückansicht des Halteteils,
- Figur 10:: eine schematische Vorderansicht des Halteteils mit eingesetzten Befestigungselementen.

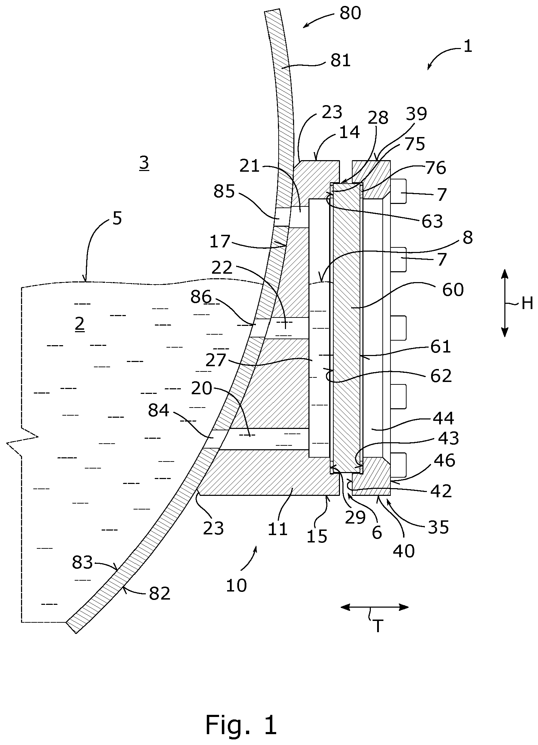

In Figur 1 ist eine schematische Schnittansicht einer Sichtfenster-Armatur 1 zu sehen, die an einem Behälter 80 befestigt ist. Der Behälter 80 weist eine Behälterwand 81 auf, die eine zum Inneren des Behälters 80 gerichtete Innenseite 83 und eine entgegengesetzt nach außen gerichtete Außenseite 82 aufweist. Wie vorliegend kann die Sichtfenster-Armatur 1 an der Behälterwand 81, vorzugsweise an der Außenseite 82 der Behälterwand 81 befestigt sein. Hierzu kann eine stoffschlüssige Verbindung vorgesehen sein, insbesondere eine Schweißverbindung.

In dem Behälter kann eine Flüssigkeit 2 aufgenommen sein. Die Sichtfenster-Armatur 1 kann dazu dienen, den Füllstand der Flüssigkeit 2 in dem Behälter 80 abzulesen. Der Füllstand kann über die Höhenlage der Flüssigkeits-Oberfläche 5 innerhalb des Behälters 80 ausgedrückt sein. Neben der Flüssigkeit 2 kann in dem Behälter 80 ein Gas 3 vorhanden sein. Bei dem Gas 3 kann es sich um Luft handeln.

Bei dem Behälter 80 kann es sich um einen Druckbehälter handeln. Insbesondere kann es sich bei dem Behälter 80 um einen Druckbehälter eines Kältekreislaufs handeln. Dieser Druckbehälter kann einen Ölabscheider aufnehmen. Der Ölabscheider kann dazu dienen, Öl aus einem Gasstrom des Kältekreislaufs abzuscheiden. Der Gasstrom kann ein Kältemittelstrom des Kältekreislaufs sein. Bei dem Öl kann es sich um Schmieröl handeln, das zur Schmierung eines Verdichters des Kältekreislaufs dient. Nach der Verdichtung kann somit das Kältemittel mit Öl angereichert sein. Der Ölabscheider kann beispielsweise als Zentrifugalabscheider und/oder als Filtereinheit ausgebildet sein. Das abgeschiedene Öl kann dann die Flüssigkeit 2 in dem Behälter bilden. Ein solcher Ölabscheider ist beispielsweise bekannt aus DE 10 2009 006 863 A1.

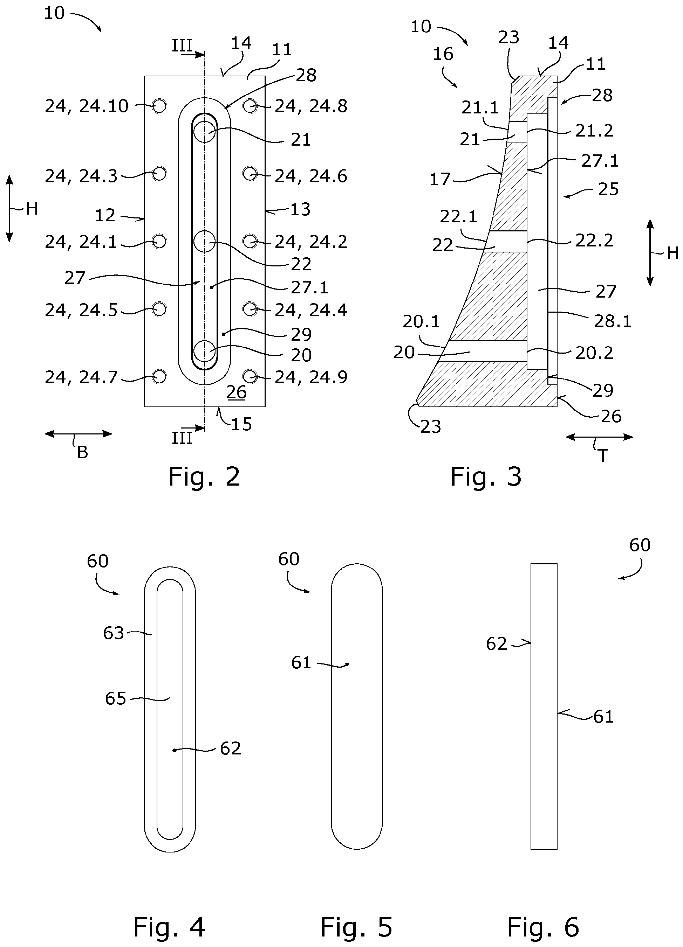

Wie der Figur 1 weiter zu entnehmen ist, weist die Sichtfenster-Armatur 1 einen Adapter 10 auf. Der Adapter 10 weist einen Anschlussbereich 16 (s. Figur 3) auf, der zum Anschluss des Adapters 10 an dem Behälter 80 dient. Der Anschlussbereich 16 weist eine Anlagefläche 17 auf, die zur Anlage an der Außenseite 82 des Behälters 80 ausgebildet ist. Wie in Figur 1 zu sehen ist, kann die Anlagefläche 17 insbesondere flächig, vorzugsweise vollflächig, an der Außenseite 82 der Behälterwand 81 anliegen.

Um der konvexen Wölbung der Behälterwand 81 Rechnung zu tragen, weist die Anlagefläche 17 eine konkave Wölbung auf. Die Wölbung der Anlagefläche 17 kann insbesondere mit der Wölbung der Außenseite 82 der Behälterwand 81 korrespondieren. Bei dem in Figur 1 gezeigten Behälter 80 handelt es sich um einen im Wesentlichen kreiszylindrischen Behälter, der horizontal bzw. liegend ausgerichtet ist. Dementsprechend ist gemäß dem vorliegenden Ausführungsbeispiel die Anlagefläche 17 derart konkav gewölbt, dass die Anlagefläche 17 einem Kreiszylinder mit einer Zylinderachse folgt, die mit der Zylinderachse des Behälters 80 zusammenfällt. Je nach Form des Behälters 80 kann die Anlagefläche 17 entsprechend anders gestaltet sein.

Gemäß dem in den Figuren dargestellten Ausführungsbeispiel kann die Anlagefläche 17 mit dem Adapter 10 einteilig ausgebildet sein. Insbesondere kann der Adapter 10 einen Grundkörper 11 aufweisen und die Anlagefläche 17 an dem Grundkörper 11 einteilig vorgesehen sein.

Der Anschlussbereich 16 kann ferner ein Kantenelement 23 aufweisen, wie in den Figuren 1 und 3 zu erkennen ist. Das Kantenelement 23 kann vorzugsweise im Übergang von der Anlagefläche 17 zu Seitenflächen 12, 13 des Adapters 10 (s. Figur 2), und/oder im Übergang von der Anlagefläche 17 zu einer Oberseite 14 und/oder einer Unterseite 15 des Adapters 10 vorgesehen sein. Besonders bevorzugt kann das Kantenelement 23 umlaufend um den Anschlussbereich 16 vorgesehen sein. Das Kantenelement 23 kann insbesondere als Fase ausgebildet sein. Vorzugsweise kann das Kantenelement 23 als Schweißnahtvorbereitung für eine Schweißnaht dienen, die den Adapter 10 mit der Behälterwand 81 verbindet.

An dem Adapter 10 ist ein Röhrenbereich 27 vorgesehen. Der Röhrenbereich 27 kann als eine gegenüber einer Frontfläche 26 (s. Figuren 2 und 3) des Adapters 10 in einer Tiefenrichtung T zurückversetzte Eintiefung ausgeführt sein. Die Eintiefung kann der Frontfläche 26 abgewandt in Tiefenrichtung T einen Boden 27.1 aufweisen, der die Eintiefung zumindest bereichsweise begrenzt. Gemäß dem vorliegenden Ausführungsbeispiel kann der Röhrenbereich 27 nutförmig in den Adapter 10 eingetieft sein.

Der Röhrenbereich 27 erstreckt sich in einer Höhenrichtung H, die der Schwerkraftrichtung entsprechen kann, und in einer hierzu senkrechten Breitenrichtung B. Vorzugsweise ist die Erstreckung des Röhrenbereichs 27 in Höhenrichtung H größer als in Breitenrichtung B.

Um die Kommunikation mit dem Inneren des Behälters 80 zu ermöglichen, können an dem Adapter 10 Durchgänge 20, 21, 22 vorgesehen sein, die eine Verbindung zwischen dem Röhrenbereich 27 und dem Anschlussbereich 16 herstellen. Wie in Figur 3 zu sehen ist, können die Durchgänge 20, 21, 22 jeweils eine Anschlussöffnung 20.1, 21.1, 22.1 aufweisen, die in die Anlagefläche 17 mündet. Den Anschlussöffnungen 20.1, 21.1, 22.1 gegenüberliegend können die Durchgänge 20, 21, 22 jeweils gegenüberliegende Öffnungen 20.2, 21.2, 22.2 aufweisen, die in den Röhrenbereich 27 münden.

Die Behälterwand 81 kann ebenfalls Durchgänge 84, 85, 86 aufweisen, die eine Verbindung zwischen der Umgebung und dem Inneren des Behälters 80 herstellen. Wie in Figur 1 dargestellt, können die Durchgänge 20, 21, 22 des Adapters 10 im montierten Zustand mit den Durchgängen 84, 85, 86 des Behälters 80 in Verbindung stehen. Insbesondere können die Durchgänge 20, 21, 22 mit ihren Anschlussöffnungen 20.1, 21.1, 22.1 im Bereich der Außenseite 82 der Behälterwand 81 mit den Durchgängen 84, 85, 86 des Behälters 80 in Verbindung gebracht werden.

Der Röhrenbereich 27 kann somit nach dem Prinzip der kommunizierenden Röhren mit dem Inneren des Behälters 80 kommunizieren, sodass die Höhenlage der Flüssigkeits-Oberfläche 5 innerhalb des Behälters 80 der Höhenlage der Flüssigkeits-Oberfläche 8 innerhalb des Röhrenbereichs 27 entspricht.

Vorzugsweise können, wie in den Figuren zu sehen, der Röhrenbereich 27 und die Durchgänge 20, 21, 22 einteilig von dem Grundkörper 11 des Adapters 10 gebildet sein.

Die Höhenlage der Flüssigkeits-Oberfläche 8 innerhalb des Röhrenbereichs 27 kann durch das Sichtfenster 60 abgelesen werden. Das Sichtfenster 60 ist vorzugsweise zumindest teilweise lichtdurchlässig ausgestaltet und kann beispielsweise aus einem Glas bestehen. Insbesondere für die Verwendung mit Druckbehältern kann die Verwendung eines vorgespannten Glases von Vorteil sein, beispielsweise eines thermisch und/oder chemisch vorgespannten Glases.

Die Gestaltung des Sichtfensters 60 ist den Figuren 4 bis 6 näher zu entnehmen. Demnach kann das Sichtfenster 60 eine Druckseite 62 und eine gegenüberliegende Außenseite 61 aufweisen. Das Sichtfenster 60 kann beispielsweise derart vorgespannt sein, dass es für eine Druckbeaufschlagung von der Druckseite 62 her optimiert ausgelegt ist.

Wie insbesondere in Figur 4 zu sehen ist, weist das Sichtfenster 60 einen Anlagebereich 63 auf. Der Anlagebereich 63 dient zur zumindest teilweisen mittelbaren oder unmittelbaren Anlage an einer Sichtfenster-Anlagefläche 29 des Adapters 10 (s. Figur 1). Der Anlagebereich 63 kann an der Druckseite 62 vorgesehen sein.

Wie in Figur 4 weiter zu sehen ist, kann im Bereich der Druckseite 62 ein Reflexbereich 65 an dem Sichtfenster 60 vorgesehen sein. Der Reflexbereich 65 kann ein erleichtertes Ablesen des Flüssigkeitsstands ermöglichen. Hierzu kann insbesondere vorgesehen sein, dass der Reflexbereich 65 eine strukturierte Oberfläche aufweist. Vorzugsweise sind als Oberflächenstrukturierung Rillen vorgesehen (nicht dargestellt). Dann kann aufgrund der unterschiedlichen Brechungsindizes von Gas 3 und Flüssigkeit 2 ein starker optischer Kontrast zwischen mit Flüssigkeit 2 und mit Gas 3 benetzten Bereichen des Reflexbereichs 65 erzielt werden. Somit kann das Ablesen erleichtert werden. Vorzugsweise sind die Rillen so ausgebildet, dass sie in Höhenrichtung H verlaufen. Der Anlagebereich 63 kann umlaufend um den Reflexbereich 65 verlaufen.

Wie bereits erwähnt, kann das Sichtfenster 60 mit seinem Anlagebereich 63 an der Sichtfenster-Anlagefläche 29 des Adapters 10 anliegen. Wie in den Figuren 1 und 3 zu sehen ist, kann die Sichtfenster-Anlagefläche 29 im Bereich einer der dem Anschlussbereich 16 gegenüberliegenden Vorderseite 25 in die Frontfläche 26 des Adapters 10 in Tiefenrichtung T eingetieft sein. Sie kann insbesondere umlaufend zu dem Röhrenbereich 27 vorgesehen sein. Die Eintiefung kann eine Sichtfenster-Aufnahme 28 zur teilweisen Aufnahme des Sichtfensters 60 bilden. Die Sichtfenster-Aufnahme 28 kann gemäß dem in den Figuren dargestellten Ausführungsbeispiel einteilig von dem Grundkörper 11 des Adapters 10 gebildet sein. Im Übergang zwischen der Sichtfenster-Anlagefläche 29 und dem Röhrenbereich 27 kann vorzugsweise ein Kantenelement 28.1 vorgesehen sein. Hierbei kann es sich um eine Fase handeln.

Wie in Figur 1 dargestellt ist, kann zwischen dem Anlagebereich 63 des Sichtfensters 60 und der Sichtfenster-Anlagefläche 29 eine Dichtung 75 angeordnet sein. Hierbei kann es sich insbesondere um eine Flachdichtung handeln.

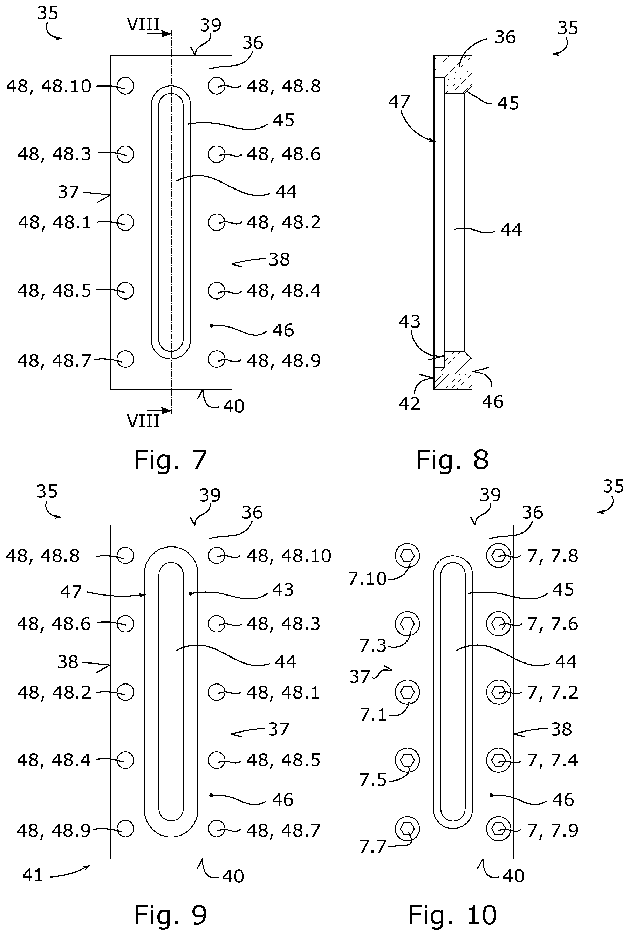

Weiter geht aus Figur 1 hervor, dass das Sichtfenster 60 an dem Adapter 10 mittels eines Halteteils 35 festgelegt werden kann. Das Halteteil 35 ist in den Figuren 7 bis 10 näher dargestellt. Demnach kann das Halteteil 35 einen im Wesentlichen plattenförmigen Grundkörper 36 aufweisen. Das Halteteil 35 kann wie vorliegend als rechteckige Platte ausgebildet sein und eine Vorderseite 46, und eine gegenüberliegende Rückseite 42 aufweisen. Vorderseite 46 und Rückseite 42 können über Schmalseiten verbunden sein, nämlich über eine Oberseite 39 und eine gegenüberliegende Unterseite 40 sowie zwei einander gegenüberliegende Seitenflächen 37, 38.

In das Halteteil 35 kann ein Durchgang 44 eingebracht sein, der dazu dienen kann, bei montierter Sichtfenster-Armatur 1 einen optischen Zugang zu dem Sichtfenster 60 bzw. dem hinter dem Sichtfenster 60 angeordneten Bereich des Röhrenbereichs 27 zu schaffen. Der Durchgang 44 kann eine Verbindung zwischen der Vorderseite 46 und der Rückseite 42 des Halteteils 35 schaffen.

Im Bereich der Rückseite 42 kann das Halteteil 35 eine Sichtfenster-Aufnahme 47 aufweisen. Wie vorliegend kann die Sichtfenster-Aufnahme 47 bevorzugt in die Rückseite 42 des Halteteils 35 eingetieft sein. Die Sichtfenster-Aufnahme 47 kann eine gegenüber der Rückseite 42 beabstandete Anlagefläche 43 für das Sichtfenster 60 aufweisen. Wie in Figur 9 deutlich zu erkennen ist, kann die Anlagefläche 43 umlaufend um den Durchgang 44 angeordnet sein.

Im Übergang zwischen dem Durchgang 44 und der Vorderseite 46 des Halteteils 35 kann ein Kantenelement 45 vorgesehen sein, wie dies insbesondere in den Figuren 7, 8 und 10 zu sehen ist. Vorzugsweise kann es sich bei dem Kantenelement 45 um eine Fase handeln.

Das Halteteil 35 kann ferner Durchgangslöcher 48 aufweisen, die zur teilweisen Aufnahme von Befestigungselementen 7 (s. Figur 10), vorliegend Schrauben, ausgebildet sind. Die Durchgangslöcher 48 können Rückseite 42, Vorderseite 46 und Grundkörper 36 des Halteteils 35 durchdringen. Je nach Dimensionen und Druckbelastung der Sichtfenster-Armatur 1 können unterschiedliche Anzahlen von Befestigungselementen 7 und somit von Durchgangslöchern 48 benötigt werden. Gemäß dem vorliegenden Ausführungsbeispiel sind zehn Durchgangslöcher 48.1-48.10 für zehn Befestigungselemente 7.1-7.10 vorgesehen.

Wie in Figur 1 zu sehen ist, kann das Sichtfenster 60 zwischen dem Adapter 10 und dem Halteteil 35 gehalten sein. Wie zuvor beschrieben, kann hierzu das Sichtfenster 60 einerseits an der Sichtfenster-Anlagefläche 29 des Adapters 10 anliegen. Gegenüberliegend, vorliegend mit der Außenseite 61 des Sichtfensters 60, kann das Sichtfenster 60 an der Anlagefläche 43 des Halteteils 35 anliegen. Wie in Figur 1 zu sehen ist, kann auch zwischen dem Sichtfenster 60 und dem Halteteil 35 eine Dichtung 76 vorgesehen sein. In diesem Bereich ist zwar keine Abdichtung erforderlich, jedoch kann die Dichtung 76 das Sichtfenster 60 vor Beschädigungen durch das Halteteil 35 bei der Verspannung schützen.

Die Befestigungselemente 7 können dazu dienen, das Sichtfenster 60 in dieser Position zu verspannen. Hierzu können an dem Adapter 10 Befestigungsaufnahmen 24 (s. Figur 2) vorgesehen sein, die zur teilweisen Aufnahme der Befestigungselemente 7 ausgebildet sind. Die Befestigungsaufnahmen 24 können in die Frontfläche 26 des Adapters 10 eingebracht sein. Vorliegend sind die Befestigungsaufnahmen 24 als Schraubaufnahmen mit Innengewinde ausgestaltet, sodass die Befestigungselemente 7 in diese eingeschraubt werden können. Die Befestigungsaufnahmen 24 sind vorzugsweise korrespondierend zu den Durchgangslöchern 48 des Halteteils 35 ausgebildet, sodass vorliegend zehn Befestigungsaufnahmen 24.1-24.10 an dem Adapter 10 vorgesehen sind.

Im montierten Zustand können die Befestigungsaufnahmen 24 mit den Durchgangslöchern 48 ausgerichtet sein, sodass die Befestigungselemente 7 durch die Durchgangslöcher 48 geführt und in die Befestigungsaufnahmen 24 eingeschraubt werden können, wobei Schraubenköpfe der Befestigungselemente 7 sich an der Vorderseite 46 des Halteteils 35 abstützen können.

Um eine sichere Abdichtung zu gewährleisten, ist gemäß dem vorliegenden Ausführungsbeispiel eine Anordnung des Sichtfensters 60 sowie der Dichtungen 75, 76 im Krafthauptschluss zwischen Halteteil 35 und Adapter 10 vorgesehen. Demnach kann zwischen dem Adapter 10 und dem Halteteil 35 ein Spalt 6 verbleiben. Um eine gleichmäßige Verspannung herzustellen, können die Befestigungselemente 7 insbesondere in der folgenden Reihenfolge angezogen werden: erstes Befestigungselement 7.1, zweites Befestigungselement 7.2, drittes Befestigungselement 7.3, viertes Befestigungselement 7.4, fünftes Befestigungselement 7.5, sechstes Befestigungselement 7.6, siebtes Befestigungselement 7.7, achtes Befestigungselement 7.8, neuntes Befestigungselement 7.9, zehntes Befestigungselement 7.10. Gegebenenfalls können im Betrieb die Befestigungselemente 7 unter Verringerung des Spalts 6 nachgezogen werden, um eventuelle Undichtigkeiten zu beheben.

## Patentansprüche

1. Sichtfenster-Armatur (1) für einen Behälter (80), insbesondere für einen Druckbehälter,
mit einem Sichtfenster (60),
mit einem Adapter (10), der einen in einer Höhenrichtung (H) verlaufenden Röhrenbereich (27) aufweist, der dazu ausgebildet ist, eine Flüssigkeit (2) aufzunehmen, und dazu, mit dem Behälter (80) zu kommunizieren,
wobei der Adapter (10) ferner eine Sichtfenster-Anlagefläche (29) aufweist, die sich in Höhenrichtung (H) und in einer senkrecht zur Höhenrichtung (H) orientierten Breitenrichtung (B) erstreckt, und die zur zumindest teilweisen mittelbaren oder unmittelbaren Anlage eines Anlagebereichs (63) des Sichtfensters (60) ausgebildet ist, sodass der Röhrenbereich (27) durch das Sichtfenster (60) zumindest teilweise optisch zugänglich ist,
und mit einem Halteteil (35), das dazu ausgebildet ist, das Sichtfenster (60) an dem Adapter (10) festzulegen,
wobei der Adapter (10) einen Anschlussbereich (16) aufweist, der eine konkav gewölbte Anlagefläche (17) zur Anlage an einer Außenseite (82) des Behälters (80) aufweist.

2. Sichtfenster-Armatur (1) nach Anspruch 1, **dadurch gekennzeichnet, dass** die Anlagefläche (17) zumindest bereichsweise einer Rotationsfläche folgt,
wobei die Rotationsfläche bevorzugt ein Rotationsellipsoid, insbesondere eine Kugel, ein Rotationsparaboloid, ein Kegel, oder ein Kreiszylinder ist.

3. Sichtfenster-Armatur (1) nach Anspruch 2, **dadurch gekennzeichnet, dass** die Rotationsachse der Rotationsfläche in Breitenrichtung (B) ausgerichtet ist,
oder dass die Rotationsachse der Rotationsfläche in Höhenrichtung (H) ausgerichtet ist.

4. Sichtfenster-Armatur (1) nach einem der Ansprüche 1 bis 3, **dadurch gekennzeichnet,**
**dass** die Anlagefläche (17) zumindest bereichsweise einer Mantelfläche eines Zylinders, insbesondere eines geraden Zylinders, folgt,
wobei die Zylinderachse des Zylinders vorzugsweise in Breitenrichtung (B) oder in Höhenrichtung (H) ausgerichtet ist.

5. Sichtfenster-Armatur (1) nach einem der Ansprüche 1 bis 4, **dadurch gekennzeichnet, dass** der Röhrenbereich (27) einen Boden (27.1) aufweist, der von der Sichtfenster-Anlagefläche (29) in einer Tiefenrichtung (T) zurückversetzt ist, wobei die Tiefenrichtung (T) senkrecht zu der Höhenrichtung (H) und der Breitenrichtung (B) orientiert ist.

6. Sichtfenster-Armatur (1) nach einem der Ansprüche 1 bis 5, **dadurch gekennzeichnet, dass** der Adapter (10) einen ersten Durchgang (20) und einen zweiten Durchgang (21) aufweist, wobei die Durchgänge (20, 21) voneinander in Höhenrichtung (H) beabstandet sind und jeweils eine Verbindung zwischen dem Anschlussbereich (16) und dem Röhrenbereich (27) bereitstellen,
wobei vorzugsweise durch das Sichtfenster (60) ein optischer Zugang zu einem oder beiden Durchgängen (20, 21) geschaffen ist, wenn das Sichtfenster (60) mittelbar oder unmittelbar an der Sichtfenster-Anlagefläche (29) des Adapters (10) anliegt.

7. Sichtfenster-Armatur (1) nach Anspruch 6, **dadurch gekennzeichnet, dass** der Adapter (10) ferner einen dritten Durchgang (22) aufweist, der eine Verbindung zwischen dem Anschlussbereich (16) und dem Röhrenbereich (27) bereitstellt,
und dass der dritte Durchgang (22) zwischen dem ersten Durchgang (20) und dem zweiten Durchgang (21) angeordnet ist,
wobei vorzugsweise durch das Sichtfenster (60) ein optischer Zugang zu dem dritten Durchgang (22) geschaffen ist, wenn das Sichtfenster (60) mittelbar oder unmittelbar an der Sichtfenster-Anlagefläche (29) des Adapters (10) anliegt.

8. Sichtfenster-Armatur (1) nach einem der vorangehenden Ansprüche, **dadurch gekennzeichnet, dass** der Adapter (10) einen Grundkörper (11) aufweist, und dass
- der Anschlussbereich (16), und/oder
- der Röhrenbereich (27), und/oder
- die Sichtfenster-Anlagefläche (29), und/oder
- der/ein erster Durchgang (20), der eine Verbindung zwischen dem Anschlussbereich (16) und dem Röhrenbereich (27) herstellt, und/oder
- der/ein zweiter Durchgang (21), der eine Verbindung zwischen dem Anschlussbereich (16) und dem Röhrenbereich (27) herstellt, und/oder
- der/ein dritter Durchgang (22), der eine Verbindung zwischen dem Anschlussbereich (16) und dem Röhrenbereich (27) herstellt,
einteilig von dem Grundkörper (11) gebildet ist/sind.

9. Sichtfenster-Armatur (1) nach einem der Ansprüche 1 bis 8, **dadurch gekennzeichnet,**
**dass** der Adapter (10) im Anschlussbereich (16) ein Kantenelement (23) aufweist, insbesondere eine Fase,
wobei das Kantenelement (23) vorzugsweise im Übergang von der Anlagefläche (17) zu einer Seitenfläche (13, 14) und/oder einer Oberseite (14) und/oder einer Unterseite (15) angeordnet ist.

10. Sichtfenster-Armatur (1) nach einem der Ansprüche 1 bis 9, **dadurch gekennzeichnet,**
**dass** das Sichtfenster (60) eine Druckseite (62) und eine gegenüberliegende Außenseite (61) aufweist,
**dass** der Anlagebereich (63) im Bereich der Druckseite (62) vorgesehen ist,
**dass** im Bereich der Druckseite (62) ein Reflexbereich (65) vorgesehen ist, wobei der Reflexbereich (65) eine strukturierte Oberfläche aufweist,
wobei die strukturierte Oberfläche insbesondere Rillen aufweist, die vorzugsweise in Höhenrichtung (H) verlaufen, wenn das Sichtfenster (60) mittelbar oder unmittelbar an der Sichtfenster-Anlagefläche (29) des Adapters (10) anliegt.

11. Sichtfenster-Armatur (1) nach einem der Ansprüche 1 bis 10, **dadurch gekennzeichnet,**
**dass** der Adapter (10) Befestigungsaufnahmen (24) aufweist,
**dass** das Halteteil (35) den Befestigungsaufnahmen (24) zugeordnete Durchgangslöcher (48) aufweist,
**dass** einander zugeordnete Befestigungsaufnahmen (24) und Durchgangslöcher (48) gemeinsam jeweils zur teilweisen Aufnahme eines Befestigungselements (7) ausgebildet sind,
und **dass** das Sichtfenster (60) zwischen dem Adapter (10) und dem Halteteil (35) mittels in den Befestigungsaufnahmen (24) und den jeweils zugeordneten Durchgangslöchern (48) teilweise aufgenommener Befestigungselemente (7) einspannbar ist.

12. Sichtfenster-Armatur (1) nach einem der Ansprüche 1 bis 11, **dadurch gekennzeichnet,**
**dass** das Sichtfenster (60) in einem montierten Zustand zwischen der Sichtfenster-Anlagefläche (29) des Adapters (10) und einer Anlagefläche (43) des Halteteils (35) verspannt ist,
und **dass** zwischen dem Sichtfenster (60) und der Sichtfenster-Anlagefläche (29) und/oder der Anlagefläche (43) des Halteteils (35) eine Dichtung (75, 76) vorgesehen ist.

13. Behälter (80), insbesondere Druckbehälter, mit einer Sichtfenster-Armatur (1) nach einem der Ansprüche 1 bis 12,
wobei vorzugsweise der Adapter (10) der Sichtfenster-Armatur (1) in seinem Anschlussbereich (16) an dem Behälter (80) stoffschlüssig befestigt ist, insbesondere mittels einer Schweißverbindung.

14. Behälter (80) nach Anspruch 13, **dadurch gekennzeichnet, dass** der Behälter (80) einen oder mehrere Durchgänge (84, 85, 86) aufweist, wobei die Durchgänge (84, 85, 86) voneinander beabstandet sind und jeweils eine Verbindung zwischen einer Innenseite (83) und einer Außenseite (82) einer Behälterwand (81) des Behälters (80) herstellen,
dass der/die Durchgang/Durchgänge (84, 85, 86) des Behälters (80) mit jeweils mit einem Durchgang (20, 21, 22) des Adapters (10) in Verbindung steht/stehen.

15. Kältekreislauf mit einem Behälter (80) nach Anspruch 13 oder 14, wobei der Behälter (80) vorzugsweise einen Ölabscheider aufnimmt, insbesondere einen Ölabscheider zur Abscheidung von Öl aus einem Gasstrom des Kältekreislaufs, bevorzugt aus einem Kältemittelstrom.
